**Europäisches Patentamt**

**European Patent Office**

**Office européen des brevets**

(19)

(11) Veröffentlichungsnummer: **0 170 849**
**A1**

(12)

# EUROPÄISCHE PATENTANMELDUNG

(21) Anmeldenummer: **85107754.5**

(22) Anmeldetag: **22.06.85**

(51) Int. Cl.⁴: **A 01 G 3/06,** F 16 H 55/14,
A 01 G 3/04

(30) Priorität: **24.07.84 DE 3427158**

(43) Veröffentlichungstag der Anmeldung: **12.02.86**
**Patentblatt 86/7**

(84) Benannte Vertragsstaaten: **AT BE CH DE LI SE**

(71) Anmelder: **GARDENA Kress + Kastner GmbH,**
**Lichternseestrasse 40 Postfach 27 47, D-7900 Ulm**
**(Donau) (DE)**

(72) Erfinder: **Die Erfinder haben auf ihre Nennung verzichtet**

(74) Vertreter: **Patentanwälte Ruff und Beier,**
**Neckarstrasse 50, D-7000 Stuttgart 1 (DE)**

(54) **Untersetzungsgetriebe, insbesondere für eine Rasenschere.**

(57) Ein Untersetzungsgetriebe für eine Rasen- oder Hek-
kenschere enthält ein von einem Ritzel (23) eines Elektromotors angetriebenes Getriebezahnrad (11). Der Zahnkranz
(12) des Getriebezahnrades (11) ist mit dem Nabenteil (13)
über eine Vielzahl von schräg verlaufenden Speichen (18)
verbunden. Bei einem plötzlichen Abstoppen des Getriebezahnrades (11) kann sich dessen Zahnkranz (12) noch um
etwa einen Zahnabstand weiterdrehen, so daß es nicht zu
einer Zerstörung der Verzahnung kommt.

EP 0 170 849 A1

Anmelderin:      GARDENA Kress + Kastner
                  Lichternseestraße 40
                  7900 Ulm/Donau

## Untersetzungsgetriebe, insbesondere für eine Rasenschere

Die Erfindung betrifft ein Untersetzungsgetriebe, insbesondere für eine Rasen- oder Heckenschere, bei dem ein Ritzel
eines Elektromotors mit dem Zahnkranz eines aus Kunststoff
bestehenden Getriebezahnrads kämmt.

Untersetzungsgetriebe dieser Art finden hauptsächlich ihre
Anwendung bei Rasen- oder Heckenscheren, die elektrisch
betrieben werden, beispielsweise mit Hilfe von Batterien.
Dabei wird die Bewegung eines relativ schnell laufenden
Elektromotors mit Hilfe des Untersetzungsgetriebes in eine
hin- und hergehende Bewegung eines Messerteils umgesetzt.
Dieses Messerteil ist gegenüber einem feststehenden Messerteil
beweglich und wirkt mit diesem zur Bildung einer Schere
zusammen.

Derartige elektrische Grasscheren sind bekannt (DE-GBM
74 35 238, US-PS 38 51 388).

Bei Rasenscheren dieser Art besteht das Problem, daß durch
Fremdkörper, wie beispielsweise Steine, die Schneidwerkzeuge ruckartig blockiert werden können. Dieses ruckartige
Blockieren führt über das Getriebe zu einem plötzlichen
Abbremsen des Antriebsmotors, der relativ große Schwungmassen aufweist. Das plötzliche Blockieren kann daher zum
Zahnradbruch führen.

Der Erfindung liegt die Aufgabe zugrunde, ein Untersetzungsgetriebe dieser Art derart weiterzuentwickeln, daß es bei
ruckartigem Blockieren nicht beschädigt wird.

Zur Lösung dieser Aufgabe ist erfindungsgemäß vorgesehen,
daß der Zahnkranz des Getriebezahnrades über Speichen mit
der Nabe verbunden ist, die gegenüber einem zugehörigen
Radius schräg verlaufen. Durch die Anordnung der schräg
verlaufenden Speichen wird eine gewisse Nachgiebigkeit des
Zahnrades in Drehrichtung erreicht, so daß im Blockierungsfall der Zahnkranz gegenüber der Nabe um mehr als eine Zahnteilung konzentrisch verdreht werden kann. Diese Drehelastizität reicht aus, den Motor zum Stillstand abzubremsen,
ohne daß irgendein Getriebeteil darunter leidet.

Es ist zwar bei Uhrwerken bereits ein Zahnrad bekannt, bei
dem der Zahnkranz über drei geschwungene Federelemente mit
der Nabe verbunden ist (Hostaform Report, Technische Kunststoffe 3/81). Dabei erstrecken sich jedoch die Federelemente
über mehr als drei Viertel eines Umfangs, so daß eine feste
Verbindung zwischen Zahnkranz und Nabe nicht gegeben ist.
Sinn dieses Zahnrades ist die Geräuschdämpfung. Es kann
nur zur Übertragung äußerst geringer Kräfte verwendet werden.

Besonders günstig ist es, wenn das Schrägverlaufen der Speichen derart ausgebildet ist, daß diese am Zahnkranz in Drehrichtung des Zahnrades voreilen.

Als besonders günstig hat es sich herausgestellt, daß der
Winkel zwischen dem Radius und der jeweiligen Speiche weniger als 10°, vorzugsweise etwa 8° beträgt.

In Weiterbildung kann vorgesehen sein, daß die Nabe einen
scheibenförmigen Teil aufweist, an dessen Außenumfang die
Speichen angeformt sind. Dadurch wird es möglich, die Drehelastizität des Zahnrades derart zu bestimmen, daß sie für
den gewünschten Zweck gerade die richtige Größe aufweist.

Der Durchmesser des scheibenförmigen Teils, die Anzahl der
Speichen und die Neigung der Speichen können zur Erzielung
des gewünschten Ergebnisses aufeinander abgestimmt werden.
Besonders günstig ist es dabei, wenn die Länge der Speichen
etwa ein Drittel des Radius des Zahnkranzes beträgt.

In Weiterbildung kann vorgesehen sein, daß alle Speichen
die gleiche Länge und die gleiche Neigung aufweisen.

Weitere Merkmale, Einzelheiten und Vorzüge der Erfindung
ergeben sich aus der folgenden Beschreibung einer bevorzugten Ausführungsform der Erfindung sowie anhand der Zeichnung. Hierbei zeigen:

  Fig. 1   eine Aufsicht auf ein von der Erfindung vorgeschlagenes Zahnrad;

  Fig. 2   die Ansicht des Zahnrades von der anderen Seite
           zusammen mit dem es antreibenden Ritzel;

  Fig. 3   einen Querschnitt durch das Zahnrad nach der
           Erfindung.

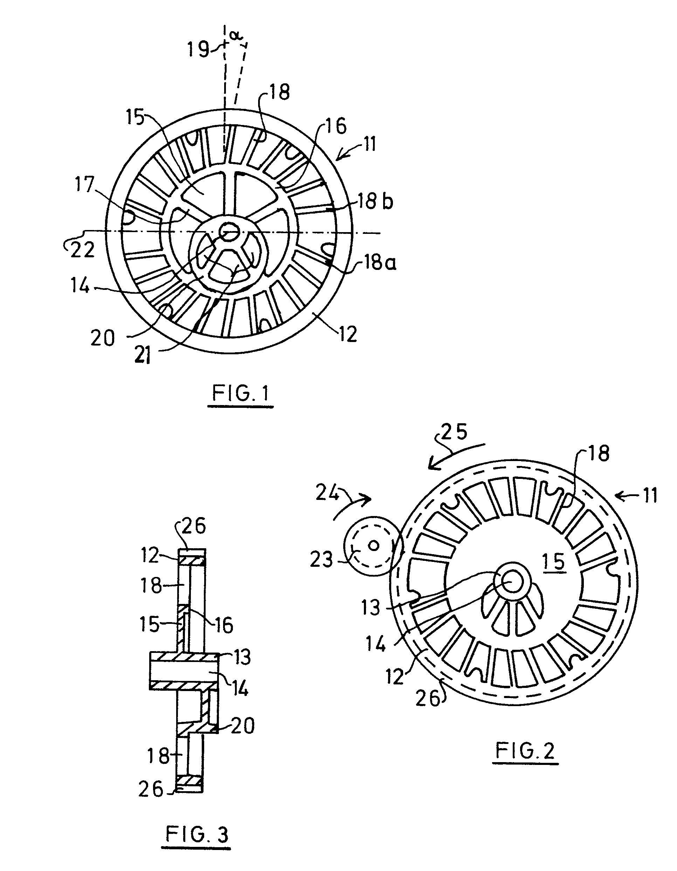

Fig. 1 zeigt ein Getriebezahnrad 11, wie es in einem Untersetzungsgetriebe für eine elektrisch betriebene Rasenschere verwendet werden kann. Das Getriebezahnrad 11 enthält einen äußeren Zahnkranz 12, dessen Verzahnung nur angedeutet ist. In der Mitte des Zahnrades 11 ist eine Nabe 13 mit einer Zentralbohrung 14 angeordnet. Das Zahnrad 11 wird mit seiner Bohrung 14 auf einen festen Zapfen aufgesetzt, um den es sich drehen kann. Im Bereich der Nabe 13 ist ein scheibenförmiger Teil 15 angeordnet, der konzentrisch zur Nabe 13 und zum Zahnkranz 12 verläuft. Der Scheibenteil 15 ist längs seines Umfanges durch eine Rippe 16 verstärkt, die über mehrere Verstärkungsstege 17 mit der Nabe 13 verbunden ist. Von dem Außenumfang des Scheibenteils 15 bzw. der Umfangsrippe 16 erstrecken sich Speichen 18 zum Zahnkranz 12. Gegenüber einem durch eine Speiche 18 verlaufenden Radius, siehe die Linie 19, sind alle Speichen 18 um einen Winkel $\alpha$ von etwas weniger als 10° geneigt.

Auf der in Fig. 1 sichtbaren Seite des Getriebezahnrades 11 ist ein zylindrischer Exzenteransatz 20 angeordnet, der mehrere Ausnehmungen 21 aufweist.

Zieht man durch das Getriebezahnrad 11 der Fig. 1 einen Durchmesser 22 senkrecht zu der Richtung maximaler Exzentrizität, so sind auf beiden Seiten des Durchmessers 22 elf Speichen 18 vorhanden, die jeweils die gleiche Länge und Neigung aufweisen. In jeder dieser beiden durch den Durchmesser 22 getrennten Gruppen von Speichen 18 besitzen diese den gleichen Abstand voneinander, während die Speichen 18a, 18b zu beiden Seiten des Durchmessers 22 einen etwa doppelt so großen Abstand aufweisen.

Fig. 2 zeigt das Getriebezahnrad 11 von der anderen Seite. Mit dem Zahnkranz 12 kämmt ein Ritzel 23, das von einem

0170849

nicht dargestellten Elektromotor in Richtung des Pfeiles
24 angetrieben wird. Das Getriebezahnrad 11 bewegt sich
also in Fig. 2 im Gegenuhrzeigersinn, was durch den Pfeil
25 angedeutet ist. Gegenüber einem Radius sind die Speichen
18 im Bereich des Zahnkranzes 12 in Drehrichtung weiter
vorne als im Bereich des Scheibenteils 15. An dem Exzenter
20 liegt bei einer Rasenschere ein Teil des beweglichen
Messers an, so daß bei Rotation des Getriebezahnrades 11
und Abgleiten des beweglichen Messers an dem Exzenter 20
eine hin- und hergehende Bewegung dieses Messers erzeugt
wird. Wird nun das Messer ruckartig blockiert, beispielsweise durch einen Stein oder einen Ast, so bleibt gleichzeitig das Getriebezahnrad 11 stehen. Der Motor besitzt aufgrund der Speichen 18 nun die Möglichkeit, sich noch etwas
weiter zu drehen, da der äußere Zahnkranz 12 sich in Richtung des Pfeiles 25 noch etwas weiter bewegen kann als die
Nabe 13 mit dem Scheibenteil 15. Dadurch wird eine langsamere Abbremsung des Motors und damit eine längere Lebensdauer des Getriebes erreicht.

Aus dem in Fig. 3 zu sehenden Schnitt ist die Verzahnung
26 an der Außenseite des Zahnkranzes 12 zu erkennen. Ebenfalls zu sehen ist, daß die Länge der Speichen 18 etwa ein
Drittel des Radius des Getriebezahnrades 11 entspricht.
Deutlich zu sehen ist die Verstärkungsrippe 16 auf der Seite
des Exzenters 20. Die Querabmessung der Speichen, siehe
Fig. 3, ist etwa halb so groß wie die Dicke des Zahnkranzes
12.

0170849

Anmelderin:       GARDENA Kress + Kastner GmbH
Lichternseestraße 40
7900 Ulm/Donau

## Untersetzungsgetriebe, insbesondere für eine Rasenschere

– – – –

A N S P R Ü C H E

1. Untersetzungsgetriebe, insbesondere für eine Rasen- oder Heckenschere, bei dem ein Ritzel (23) eines Elektromotors mit dem Zahnkranz (12) eines aus Kunststoff bestehenden Getriebezahnrades (11) kämmt, dadurch gekennzeichnet, daß der Zahnkranz (12) des Getriebezahnrades (11) über Speichen (18) mit der Nabe (13) verbunden ist, die gegenüber einem zugehörigen Radius (19) schräg verlaufen.

2. Untersetzungsgetriebe nach Anspruch 1, dadurch gekennzeichnet, daß die Speichen (18) am Zahnkranz (12) in Drehrichtung des Zahnrades (11) voreilen.

3. Untersetzungsgetriebe nach Anspruch 1 oder 2, dadurch gekennzeichnet, daß der Winkel ($\alpha$) zwischen Radius (19) und Speiche (18) weniger als 10° beträgt.

0170849

4. Untersetzungsgetriebe nach einem der vorhergehenden
Ansprüche, dadurch gekennzeichnet, daß die Nabe (13)
einen scheibenförmigen Teil (15) aufweist, an dessen
Außenumfang die Speichen (18) angeformt sind.

5. Untersetzungsgetriebe nach einem der vorhergehenden
Ansprüche, dadurch gekennzeichnet, daß die Länge der
Speichen (18) etwa ein Drittel des Radius des Zahnrades (11) beträgt.

6. Untersetzungsgetriebe nach einem der vorhergehenden
Ansprüche, dadurch gekennzeichnet, daß alle Speichen
(18) die gleiche Länge und Neigung aufweisen.

7. Untersetzungsgetriebe nach einem der vorhergehenden
Ansprüche, dadurch gekennzeichnet, daß die Speichen
(18) in zwei gleiche Gruppen aufgeteilt sind, in denen
die Speichen (18) äquidistant ausgebildet sind.

- - - - -

FIG.1

FIG.3

FIG.2

## EUROPÄISCHER RECHERCHENBERICHT

**Europäisches Patentamt**

0170849
Nummer der Anmeldung

EP 85 10 7754

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | GB-A- 215 082 (STAUNTON) <br><br> * Insgesamt * | 1,2,4, 6,7 | A 01 G 3/06 <br> F 16 H 55/14 <br> A 01 G 3/04 |
| A | | 3 | |
| Y | US-A-3 909 943 (BUSCHMAN) <br><br> * Insgesamt * | 1,2,4, 6,7 | |
| A | US-A-2 399 122 (JOHNSON) <br> * Seite 2, linke Spalte, Zeile 54 - rechte Spalte, Zeile 22; Ansprüche 1-3,7; Abbildungen 5,6 * | 1,2,6 | |
| A | DE-A-3 109 153 (IMAZAIKE) <br><br> * Seite 11, Zeile 29 - Seite 14, Zeile 25; Abbildungen 7-10; Ansprüche 1,3-5 * | 1,2,4-6 | RECHERCHIERTE SACHGEBIETE (Int. Cl.4) <br><br> A 01 G <br> F 16 H <br> A 47 J |
| A | FR-A-2 438 764 (MAGNETI MARELLI) <br> * Seite 2, Zeile 28 - Seite 4, Zeile 5; Ansprüche 1-5; Abbildungen 1-4 * | 1,4,5 | |
| A | DE-A-2 714 020 (BEITER) <br> * Ansprüche 1,3,5; Abbildungen 1,2 * | 1,4,6 | |

Der vorliegende Recherchenbericht wurde für alle Patentansprüche erstellt.

| Recherchenort <br> DEN HAAG | Abschlußdatum der Recherche <br> 29-10-1985 | Prüfer <br> MEINDERS H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82